(19) Europäisches Patentamt / European Patent Office / Office européen des brevets

(11) **EP 2 758 675 B1**

(12) **EUROPÄISCHE PATENTSCHRIFT**

(45) Veröffentlichungstag und Bekanntmachung des Hinweises auf die Patenterteilung:
**01.03.2017  Patentblatt 2017/09**

(51) Int Cl.:
***F16B 13/14*** *(2006.01)*

(21) Anmeldenummer: **12738424.6**

(22) Anmeldetag: **10.07.2012**

(86) Internationale Anmeldenummer:
**PCT/EP2012/063473**

(87) Internationale Veröffentlichungsnummer:
**WO 2013/041259 (28.03.2013 Gazette 2013/13)**

(54) **ANKERSTANGE**

ANCHORING ROD

TIGE D'ANCRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2011  DE 102011083153**

(43) Veröffentlichungstag der Anmeldung:
**30.07.2014  Patentblatt 2014/31**

(73) Patentinhaber: **HILTI Aktiengesellschaft
9494 Schaan (LI)**

(72) Erfinder:
• **GLOGGER, Josef
 86807 Buchloe (DE)**
• **WINKLER, Bernhard
 A-6800 Feldkirch (AT)**

(74) Vertreter: **Hilti Aktiengesellschaft
Corporate Intellectual Property
Feldkircherstrasse 100
Postfach 333
9494 Schaan (LI)**

(56) Entgegenhaltungen:
EP-A1- 0 794 336        EP-A1- 0 856 669
EP-A1- 0 867 624        EP-A1- 1 213 492
EP-A2- 1 936 212        WO-A1-95/26457
DE-A1-102008 041 928    DE-U1-202005 005 579
DE-U1-202009 014 039

**Beschreibung**

Die Erfindung betrifft eine Ankerstange zur chemischen Befestigung mit organischen und/oder anorganischen Mörtelmassen in einem Bohrloch, insbesondere für die Verankerung in ungereinigten und/oder gerissenen Bohrlöchern sowie in Zugzonen von Bauteilen gemäß dem Oberbegriff des Anspruchs 1.

Neben den klassischen Befestigungstechniken, bei denen mit Hilfe von in einem Bohrloch kraft- und/oder formschlüssig verankerten Spreizdübeln oder Hinterschnittsystemen Befestigungspunkte erstellt werden, sind aus dem Stand der Technik chemische Befestigungstechniken bekannt, bei denen eine Ankerstange oder ein anderes Befestigungselement in eine mit einer Mörtelmasse gefüllte Bohrung eingesetzt wird und nach dem Aushärten der Mörtelmasse fixiert ist. Derartige Verbundankersysteme weisen den Vorteil auf, dass sie abhängig vom gewählten Befestigungselement weitgehend spreizdruckfrei sind und demnach geringe Achs- und Randabstände erlauben.

Aus dem Stand der Technik (siehe z.B. DE 10 2009 014 039 U) sind Ankerstangen bekannt, die als Verankerungsbereich eine Mehrzahl an Spreizabschnitten aufweisen, die aus dem Schaft der Ankerstange herausgeformt sind, sogenannte Verbundspreizanker. Bei diesen Ankerstangen findet im ausgehärteten Zustand der Mörtelmasse die Kraftübertragung einerseits durch die stoffschlüssige Wirkung des Verbundmörtels zwischen Bohrlochwand und Mörtelmasse andererseits aber auch über eine Spreizwirkung durch die Spreizabschnitte statt. Durch die Spreizwirkung werden unter Belastung der Ankerstange die auf diese wirkenden Normalkräfte (Zugkräfte) in radial wirkende Spreizkräfte umgewandelt, so dass diese Befestigungsanordnung nachspreizen kann und somit auch in der Zugzone eines Bauteils oder in gerissenem Beton angebracht werden kann.

Ein Nachteil der bekannten Verbundspreizanker besteht darin, dass sie aufgrund der zum Teil recht hohen Spreizkräfte nur bedingt für randnahe Befestigungen geeignet sind.

Ferner erfordern Verbundanker für eine sichere Verankerung des Befestigungselementes eine aufwendige Reinigung des Bohrlochs vor dem Einbringen der aushärtbaren Mörtelmasse, die zudem zu einer erheblichen Belastung des Arbeitsumfeldes mit Staub führt. Erfolgt die Reinigung nicht oder nur unzureichend, wirkt sich dies außerdem negativ auf die Lastwerte aus. Im ungünstigsten Fall, insbesondere dann, wenn sich viel Bohrmehl zwischen der Bohrlochwand und der ausgehärteten Mörtelmasse befindet, kann bei Belastung die Ankerstange zusammen mit der Mörtelschale aus dem Bohrloch gezogen werden.

Es ist daher Aufgabe der vorliegenden Erfindung, die genannten Nachteile der bekannten Ankerstangen zu beseitigen. Es soll eine Ankerstange geschaffen werden, die eine gleichmäßigere Lasteinleitung in den Verankerungsgrund ermöglicht, damit eine randnahe Befestigung auch in gerissenem Beton und in ungereinigten Bohrlöchern möglich wird, und mit der hohe Lastwerte erreicht werden können, die über denen des Standes der Technik oder zumindest im vergleichbaren Bereich liegen.

Der Erfindung liegt der Gedanke zugrunde, eine Ankerstange mit einer optimierten Gestaltung des Verankerungsbereichs zu verwenden, mit der es nicht mehr erforderlich ist, das Bohrloch aufwendig zu reinigen und bei der im Vergleich zu anderen Spreizankern oder Verbundspreizankern eine Befestigung näher am Rand möglich wird, ohne Einbußen bei den Lastwerten hinnehmen zu müssen. Ferner soll eine Ankerstange sowohl in ungerissenem als auch in gerissenem Beton eingesetzt werden und gleichermaßen hohe Lastwerte liefern.

Es ist bekannt, dass ein großer Außendurchmesser des Verankerungsbereichs und ein kleiner Kerndurchmesser des Verankerungsbereichs hohe Lastwerte liefern. Beide Größen sind jedoch nur innerhalb bestimmter Grenzen wählbar. Der Außendurchmesser des Verankerungsbereichs wird hauptsächlich vom Bohrlochdurchmesser begrenzt. Der Außendurchmesser darf gerade so groß gewählt werden, dass die Ankerstange noch ohne Probleme in das Bohrloch eingeführt werden kann. Er darf aber auch nicht zu klein gewählt werden, da die Mörtelschale, welche die Ankerstange umgibt und den Ringspalt zwischen Bohrlochwand und Ankerstange füllt, ansonsten zu dick wird, so dass diese nicht mehr aufbrechen und damit keine Spreizung gegen die Bohrlochwand stattfinden kann. Der Spannungsdurchmesser im Verankerungsbereich bestimmt, wann bei Einwirken von Normalkräften Materialversagen, d.h. ein Bruch der Ankerstange, eintritt. Er muss also eine bestimmte Mindestgröße aufweisen, abhängig von der Bohrlochgröße bzw. Nenndurchmesser der Ankerstange.

Eine weitere Aufgabe bestand darin, innerhalb der systembedingten Rahmenbedingungen den Verankerungsbereich einer Ankerstange der eingangs erwähnten Art so zu gestalten, dass die oben genannten Nachteile beseitigt werden und möglichst hohe Lastwerte, auch im ungereinigten und gerissenen Bohrloch und bei Randnahen Befestigungen erreicht werden können.

Diese Aufgaben werden erfindungsgemäß durch eine Verwendung nach Anspruch 1 gelöst. Besonders bevorzugte Ausführungsformen der Erfindung sind in den abhängigen Ansprüchen angegeben.

Die Erfinder haben herausgefunden, dass das Verhältnis von Außendurchmesser zu Kerndurchmesser der konusartigen Erweiterungen und das Verhältnis von Abstand der konusartigen Erweiterungen zu mittlerem Bohrlochdurchmesser einen Einfluss auf die zu erreichenden Lastwerte, insbesondere in ungereinigten Bohrlöchern haben. Dabei wurde ferner gefunden, dass hervorragende Eigenschaften, wie besonders hohe Lastwerte, geringer Spreizdruck, Verwendung im gereinigten und/oder ungereinigten sowie in ungerissenen und/oder gerissenem Bohrloch, erreicht werden können, wenn die beiden Verhältnisse in einem bestimmten Bereich liegen. Liegt nur ein Verhältnis außerhalb des erfindungsgemäßen Bereichs, hat dies einen erheblichen Einfluss auf die Eigenschaften der Ankerstange. Ferner haben die Erfinder herausgefunden, dass die beiden Verhältnisse voneinander abhängig sind, da sich die Geometrien der Erweiterungsabschnitte überlagern und gegenseitig beeinflussen.

Durch den Konuswinkel der Erweiterungsabschnitte, gemessen gegenüber der Ankerachse, kann der Anteil der Normalkräfte, auch Zugkräfte genannt, bestimmt werden, der in Radialkräfte, auch Spreizkräfte genannt, umgewandelt wird, wobei ein kleiner Konuswinkel zu einem hohen Anteil an Radialkräften führt. Damit jedoch eine Anwendung im randnahen Bereich eines Bauteils möglich wird, dürfen die Radialkräfte nicht zu groß werden. Damit möglichst hohe Normalkräfte bei möglichst geringen Spreizkräften an einen Verbundspreizanker angelegt werden können, darf der Konuswinkel der Erweiterungsabschnitte nur in einem relativ engen Bereich liegen.

Zur Lösung der Aufgabe ist bei der erfindungsgemäßen Verwendung eine Ankerstange mit einem Verankerungsbereich versehen, der eine Profilierung aufweist, die aus mehreren axial hintereinander angeordneten Erweiterungsabschnitten gebildet ist, die konusartig ausgebildet sind und deren Durchmesser jeweils in Richtung des freien Vorderendes der Ankerstange zunimmt. Die Erweiterungsabschnitte sind dadurch gekennzeichnet, dass das Verhältnis von Abstand (p) der Erweiterungsabschnitte zu mittlerem Bohrlochdurchmesser ($d_{cut, med}$) 0,40 bis 0,60 beträgt, das Verhältnis von Außendurchmesser ($d_A$) zu Kerndurchmesser ($d_K$) der Erweiterungsabschnitte 1,35 bis 1,55 beträgt und der Konuswinkel der Erweiterungsabschnitte ($\alpha$) 22,5° bis 27,5° beträgt. Der mittlere Bohrlochdurchmesser $d_{cut, med}$ entspricht dabei der Hälfte der Summe aus maximalem und minimalem Bohrlochdurchmesser gemäß ICBO- bzw. ETAG-Richtlinie für das metrische System oder ACI-Richtlinie 355.2.07 für das angloamerikanische System bei einem gegebenen Durchmesser für die Ankerstange:

$$d_{cut, med} = (d_{cut, min} + d_{cut, max})/2.$$

Bevorzugt beträgt das Verhältnis von Abstand der Erweiterungsabschnitte (p) zu mittlerem Bohrlochdurchmesser ($d_{cut, med}$) 0,40 bis 0,55. Das Verhältnis von Außendurchmesser der Erweiterungsabschnitte ($d_A$) zu Kerndurchmesser ($d_K$) der Ankerstange beträgt bevorzugt 1,40 bis 1,55 und der Konuswinkel der Erweiterungsabschnitte ($\alpha$) beträgt bevorzugt 25°. Der Abstand (p) sowie die Konusgeometrie der Erweiterungsabschnitte ist über den Verankerungsbereich konstant.

Damit ergeben sich folgende Bereiche für die konusartigen Erweiterungsabschnitte:

| Verhältnis p : $d_{cut, med}$ | Verhältnis $d_A$ : $d_K$ | Konuswinkel |
|---|---|---|
| 0,40-0,60 | 1,35-1,55 | 25±2,5° |
| 0,40-0,55 | 1,40-1,50 | 25±2,5° |

Nachdem der mittlere Bohrlochdurchmesser $d_{cut, med}$ bei einem gegebenen Bohrlochdurchmesser nahezu konstant ist, kann dieses Verhältnis im Wesentlichen über den Abstand der Erweiterungsabschnitte p gesteuert werden.

Bei einem Verhältnis p : $d_{cut, med}$ größer als 0,60 nimmt der Lastwert ab, da der Abstand der Erweiterungsabschnitte zu groß wird und dementsprechend weniger Erweiterungsabschnitte in dem Verankerungsbereich untergebracht werden können. Ist das Verhältnis kleiner als 0,40, können theoretisch zwar höhere Lastwerte erreicht werden, jedoch bedingt dies geometrisch entweder einen größeren Kerndurchmesser $d_K$ oder einen kleineren Außendurchmesser $d_A$ des Erweiterungsabschnittes, so dass dies das Verhältnis $d_A$ : $d_K$ negativ beeinflusst.

Bei einem Verhältnis $d_A$ : $d_K$ größer als 1,55 können auch hier theoretisch höhere Lastwerte erreicht werden, allerdings zu Lasten des Spannungsquerschnitts des Verankerungsbereichs, der ein Minimum aufweisen sollte damit das Material der Ankerstange nicht versagt. Dies bedeutet, dass der Kerndurchmesser $d_K$ bei gegebenem Außendurchmesser $d_A$, der durch die Bohrlochgröße begrenzt ist, nicht beliebig klein gemacht werden kann, ohne die Tragfähigkeit der Ankerstange zu gefährden. Bei einem Verhältnis $d_A$: $d_K$ kleiner als 1,35 sinken die möglichen Lastwerte.

Der Konuswinkel hat einen direkten Einfluss auf den Lastwert und die Spreizwirkung der Ankerstange. Ist der Konuswinkel kleiner als 22,5° werden zwar die Lastwerte weiter erhöht. Jedoch erhöht sich hierdurch auch die Spreizwirkung, d.h. hohe Normalkräfte werden auch in hohe Radialkräfte (Spreizkräfte) umgewandelt, was die Anwendung der Ankerstange für randnahe Befestigungen beschränkt. Bei einem Konuswinkel von größer als 27,5° sinkt die Spreizwirkung, wodurch sich die Wahrscheinlichkeit, dass sich die Ankerstange nicht mehr vom Mörtel löst und die Mörtelschale nicht mehr aufbricht, erhöht. Hierdurch kann sich die Mörtelschale nicht mehr verspreizen und der Anker löst sich zusammen mit der Mörtelschale von der Bohrlochwand und kann aus dem Bohrloch gezogen werden.

Zweckmäßig ist das Mittel für den Lastangriff am Anbaubereich ein Gewinde, insbesondere ein Normgewinde, zur Festlegung eines Anbauteils.

Wesentlich für den Einsatz in ungereinigten und/oder gerissenen Bohrlöchern ist, dass zwischen dem Verbundspreizanker und der Mörtelmasse keine stoffschlüssige sondern eine formschlüssige Verbindung besteht. Damit der Verbundspreizanker hohe Lastwerte und ein Nachspreizen in ungereinigten und/oder gerissenen Bohrlöchern ermöglichen kann, ist es erforderlich, dass die Mörtelschale, welche die Spreizabschnitte umhüllt, aufbricht. Dies ist nur möglich, wenn die Mörtelschale nicht stoff- oder reibschlüssig an den Spreizabschnitten der Ankerstange haftet.

Es erweist sich daher von Vorteil, wenn der Verankerungsbereich eine gegenüber der aushärtbaren Mörtelmasse nichthaftende Oberfläche aufweist. Vorzugsweise ist der Verankerungsbereich dazu mit einer Ummantelung bzw. einer Beschichtung versehen, die gegenüber der Mörtelmasse nichthaftend ist. Dadurch kann sich die Ankerstange bei Zugbelastung in einem sich öffnenden Riss von der ausgehärteten Mörtelschale lösen und eine Bewegung in Achsrichtung ausführen. Bei der Verschiebung rutschen die konusartigen Erweiterungsabschnitte in den durch den Riss erweiterten Bereich zwischen der Mörtelschale und dem Verankerungsbereich in Richtung der Zugkraft nach, so dass erneut eine formschlüssige Verspannung zwischen Ankerstange und Mörtelschale eintritt. Durch weitere Erhöhung der Zugbelastung werden mit Hilfe der Flächen der konusartigen Erweiterungsabschnitte Radialkräfte aufgebaut und die ausgehärtete Mörtelschale wird gebrochen. Dies führt dazu, dass sich die Ankerstange gegenüber der Bohrlochwand verspreizen kann und der Formschluss zwischen der Bohrlochwand und den Mörtelschalen wiederhergestellt wird. Daher ist die Ankerstange trotz einer Staubschicht zwischen Mörtelschale und Bohrlochwand imstande, Kräfte in das Bauteil einzuleiten. Durch diese Fähigkeit nachzuspreizen sind eine Risstauglichkeit der Ankerstange und deren Einsatz in der Zugzone des Betons gegeben. Durch das Nachspreizverhalten ist die erfindungsgemäße Ankerstange auch in schlecht oder nicht gereinigten Bohrlöchern einsetzbar.

Die Oberfläche des Grobgwindes kann dabei galvanisch glanzvernickelt und/oder verchromt sein oder mit anderen Trenn- und/oder Gleitmitteln beschichtet sein, wie etwa ein wachsartiges, synthetisches Polymer, Polytetrafluorethylen, Siliconpolymer und dergleichen. Alternativ ist es möglich, die Oberfläche elektrochemisch zu glätten, beispielsweise mittels Elektropolieren.

Damit der Mörtelfluss vom Bohrlochgrund zur Bohrlochöffnung gewährleistet ist und Lufteinschlüsse durch das Setzen der Ankerstange vermieden werden, sollten, insbesondere bei kleinem Ringspalt, die konusartigen Erweiterungsabschnitte mit Mitteln für den Durchtritt der organischen und/oder anorganischen Mörtelmasse, wie etwa Fließkanäle, versehen sein. Bevorzugt sind die Fließkanäle der konusartigen Erweiterungsabschnitte versetzt zueinander angeordnet, wobei besonders bevorzugt die Fließkanäle wendelförmig um den Verankerungsbereich der Ankerstange angeordnet sind. Dies stellt eine möglichst gleichmäßige und vollständige Benetzung der Oberflächen der konusartigen Erweiterungsabschnitte sicher. Die beim Setzen der Ankerstange zwischen den konusartigen Erweiterungsabschnitten möglicherweise eingeschlossene Luft wird durch die Fließkanäle nach oben zur Bohrlochöffnung gedrückt. Die Fließkanäle müssen so dimensioniert sein, dass die organische und/oder anorganische Mörtelmasse ohne großen Widerstand durch diese hindurchfließen kann. Hierdurch wird auch der Widerstand beim Einsetzen der Ankerstange reduziert. Damit wird eine möglichst vollständige Benetzung des Verankerungsbereichs mit der aushärtbaren Mörtelmasse erreicht.

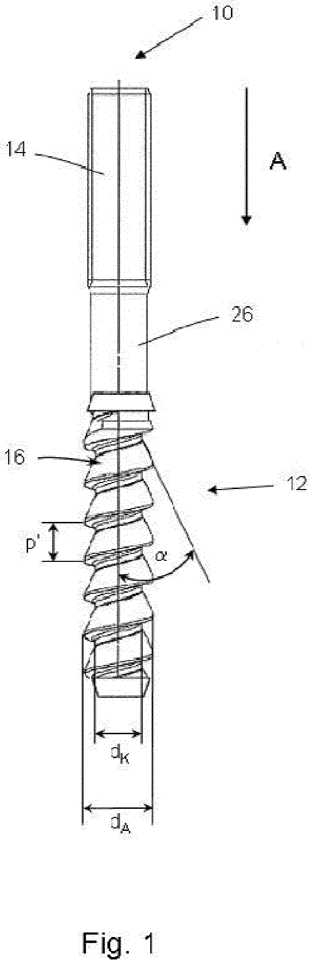

In einer besonders bevorzugten Ausführungsform sind die konusartigen Erweiterungsabschnitte miteinander verbunden und verlaufen schraublinienförmig entlang des Verankerungsbereichs, so dass eine gewindeartige Profilierung, die einem Grobgewinde entspricht, erhalten wird, wie dies in Fig. 1 dargestellt ist. Hierdurch ist es nicht erforderlich, dass die Profilierung mit Mitteln für den Durchtritt der organischen und/oder anorganischen Mörtelmasse versehen ist. Somit steht die Konusfläche vollständig für die Lasteinleitung in das Bauteil zur Verfügung, was zu höheren Lastwerten führt.

In dieser Ausführungsform entsprechen die Abstände (p) der konusartigen Erweiterungsabschnitte der Steigung (p') des Gewindes, die über die Längserstreckung des Verankerungsbereichs konstant ist. So kann eine gleichmäßige Förderung der aushärtbaren organischen und/oder anorganischen Mörtelmasse und damit eine vollständige Benetzung der Ankerstange über den gesamten Verankerungsbereich gewährleistet werden.

Der Setzvorgang der Ankerstange erfolgt auf bekannte Weise.

Bevorzugt entspricht der Spannungsquerschnitt der konusartigen Erweiterungsabschnitte mindestens dem Spannungsquerschnitt der weiteren Ankerelemente, wie Glattschaft oder Anschlussgewinde am Anbaubereich, um ein vorzeitiges Stahlversagen der Ankerstange zu verhindern. Die erfindungsgemäße Ankerstange kann aufgrund des vorteilhaften Nachspreizverhaltens der Ankerstange unter Belastung in einer Zugzone eines Bauteils oder in einem gerissenen Bohrloch angeordnet werden. Ferner ist eine aufwendige Reinigung des Bohrlochs vor dem Setzen der Ankerstange nicht mehr erforderlich. Durch die optimierte Geometrie des Verankerungsbereichs, genauer der Profilierung des Verankerungsbereichs, werden hohe Lastwerte der eingebundenen Ankerstange auch im randnahen Bereich eines Bauteils erreicht.

Durch den Wegfall der geforderten Reinigungsschritte (z.B. Ausblasen, Ausbürsten und erneutes Ausblasen des Bohrlochs) wird die Anwendungssicherheit erhöht und das Setzen der Ankerstange deutlich beschleunigt. Es werden keine zusätzlichen Reinigungsgeräte zum Setzen der Ankerstange benötigt und die Umgebungsluft und damit der Anwender werden nicht mehr durch ausgeblasenes Bohrmehl bzw. Reinigungsstaubes zusätzlich belastet.

Im Folgenden wird die Erfindung unter Bezugnahme auf ein in der schematischen Zeichnung dargestelltes Ausführungsbeispiel näher erläutert. Die einzige Figur zeigt eine Ankerstange 10, die einen Verankerungsbereich 12 sowie einen Anbaubereich 14 aufweist. Der Verankerungsbereich 12 ist mit einer Profilierung 16 versehen und dazu vorgesehen, in ein vorgefertigtes Bohrloch in Einsetzrichtung A eingesetzt zu werden.

Das Bohrloch wird vor dem Einsetzen der Ankerstange 10 mit einer aushärtbaren organischen und/oder anorganischen Mörtelmasse befüllt, wobei eine formschlüssige Verbindung des Verankerungsbereichs 12 mit der aushärtbaren Mörtelmasse entsteht. Das Bohrloch hat dabei einen Durchmesser ($d_{cut}$, in der Zeichnung nicht dargestellt), der um so viel größer ist als der maximale Durchmesser des Verankerungsbereichs 12 ($d_A$) gewählt ist, dass dieser an allen Seiten von der aushärtbaren Mörtelmasse umgeben ist. Der maximale Außendurchmesser $d_A$ der konusförmigen Erweiterungsabschnitte ist etwa 0,2 mm kleiner als der Bohrlochdurchmesser gewählt.

Der Spannungsquerschnitt des konusförmigen Erweiterungsabschnitts 16 $d_K$ entspricht in etwa dem Spannungsquerschnitt der Ankerstange 10.

Die Profilierung verläuft wenigstens über den gesamten Bereich der Ankerstange 10, welcher im eingebetteten Zustand den Verankerungsbereich 12 bildet. Es ist aber auch möglich, dass der Glattschaft und teilweise das Anschlussgewinde in das Bohrloch eingebettet wird. Die Profilierung gibt dabei die Mindesteinbetttiefe für die Ankerstange 10 vor. Wie aus der Figur deutlich wird, hat die Profilierung 16 die Form von konusförmigen Erweiterungsabschnitten, die gewindeförmig um die Ankerstange angeordnet sind, so dass sich eine Art Grobgewinde ergibt. Die Konusfläche weist dabei in Einschubrichtung A von der Ankerstange weg und beschreibt gegenüber der Längsachse der Ankerstange 10 mit der Längsrichtung einen Konuswinkel $\alpha$.

Bei dem gezeigten Beispiel ist der Anbaubereich 14 so ausgebildet, dass zwischen dem freien Ende des Anbaubereichs 14 und dem Beginn des Verankerungsbereichs 12 ein Bereich 26 mit leicht reduziertem Durchmesser vorgesehen ist, der dazu genutzt werden kann, ein weiteres Anbauteil zu fixieren oder eine Beschriftung auf die Ankerstange aufzubringen. Der Bereich 26 kann aber auch den gleichen Durchmesser wie der Anbauabschnitt 14 haben oder, falls der Anbauabschnitt 14 mit einem Gewinde versehen ist, ebenfalls ein Gewinde aufweisen.

Zur Schaffung einer Befestigungsanordnung wird zuerst ein Bohrloch mit der erforderlichen Tiefe und dem erforderlichen Durchmesser erstellt. Anschließend wird das Bohrloch mit einer entsprechenden Menge der aushärtbaren organischen und/oder anorganischen Mörtelmasse befüllt und dann die Ankerstange mit dem Verankerungsbereich 12 voran in das Bohrloch eingeführt. Durch die schraublinienförmige Ausgestaltung der konusartigen Erweiterungsabschnitte 16 wird ein optimaler Fluss der Mörtelmasse in Richtung des Bohrlochmundes gewährleistet. Nach dem Aushärten der Mörtelmasse ist die Ankerstange auf das maximale Lastniveau belastbar.

In den nachfolgenden Tabellen sind für in Figur 1 dargestellte bevorzugte Ausführungsformen (metrisches System [mm] - Tabelle 1; angloamerikanisches System [Zoll] - Tabelle 2) einer erfindungsgemäßen Ankerstange für gängige Ankerstangentypen der übliche international genormte Bohrungs-Nenndurchmesser ($d_{cut, nom}$), der minimale ($d_{cut, min}$) und der maximale ($d_{cut, max}$) Bohrlochdurchmesser gemäß ICBO-, ETAG-Richtlinie für das metrische System bzw. ACI-Richtlinie 355.2.07 für das angloamerikanische System sowie der Mittelwerte ($d_{cut, med}$) davon, die Steigung (p) des konusartigen Erweiterungsabschnittes, die Konuswinkel ($\alpha$), der zugehörige Außendurchmesser des konusartigen Erweiterungsabschnittes ($d_A$), der Kerndurchmesser des konusartigen Erweiterungsabschnittes ($d_K$), das Verhältnis von Steigung (p) zu mittlerem Bohrlochdurchmesser ($d_{cut, med}$) und das Verhältnis von Außendurchmesser ($d_A$) zu Kerndurchmesser ($d_K$) der konusartigen Erweiterungsabschnitte dargestellt.

Tabelle 1: bevorzugte Werte in mm für genormte Ankerstangen gemäß der in der Figur gezeigten bevorzugten Ausführungsform

| | $d_{cut, nom}$[1] [mm] | $d_{cut, min}$[2] [mm] | $d_{cut, max}$[3] [mm] | $d_{cut, med}$[4] [mm] | p[5] [mm] | $\alpha$[6] [°] | $d_A$[7] [mm] | $d_K$[8] [mm] | p/$d_{cut, med}$ | $d_A$/$d_K$ |
|---|---|---|---|---|---|---|---|---|---|---|
| M8 | 10,0 | 10,05 | 10,45 | 10,25 | 5,25 | 25,0 | 9,25 | 6,30 | 0.51 | 1,47 |
| M10 | 12,0 | 12,10 | 12,50 | 12,30 | 6,40 | 25,0 | 11,25 | 7,60 | 0.52 | 1,48 |
| M12 | 14,0 | 14,10 | 14,50 | 14,30 | 7,50 | 25,0 | 13,25 | 9,00 | 0.52 | 1,47 |
| M16 | 18,0 | 18,10 | 18,50 | 18,30 | 9,00 | 25,0 | 17,25 | 12,00 | 0.49 | 1,44 |
| M20 | 22,0 | 22,10 | 22,55 | 22,33 | 9,75 | 25,0 | 21,05 | 15,00 | 0.44 | 1,40 |

[1] Bohrungs-Nenndurchmesser

[2] minimaler Bohrungsdurchmesser gemäß ICBO-, ETAG-Richtlinie

[3] maximaler Bohrungsdurchmesser gemäß ICBO-, ETAG-Richtlinie

[4] mittlerer Bohrungsdurchmesser ($d_{cut, med}$ = ($d_{cut, min}$ + $d_{cut, max}$) / 2)

[5] Gewindesteigung

[6] Konuswinkel

[7] Außendurchmesser konusartige Erweiterungsabschnitte

[8] Kerndurchmesser konusartige Erweiterungsabschnitte

Tabelle 2: bevorzugte Werte in Zoll für genormte Ankerstangen gemäß der in der Figur gezeigten bevorzugten Ausführungsform

| | $d_{cut, nom}$[1] [mm] | $d_{cut, min}$[2] [mm] | $d_{cut, max}$[3] [mm] | $d_{cut, med}$[4] [mm] | $p$[5] [mm] | $\alpha$[6] [°] | $d_A$[7] [mm] | $d_K$[8] [mm] | $p/d_{cut, med}$ | $d_A/d_K$ |
|---|---|---|---|---|---|---|---|---|---|---|
| 3/8" | 11,11 (7/16") | 11,37 | 11,87 | 11,62 | 5,90 | 25,0 | 10,40 | 7,00 | 0.51 | 1,49 |
| 1/2" | 14,29 (9/16") | 14,54 | 15,05 | 14,80 | 7,50 | 25,0 | 13,50 | 9,10 | 0.51 | 1,48 |
| 5/8" | 19,05 (3/4") | 19,41 | 19,94 | 19,68 | 9,30 | 25,0 | 18,40 | 12,20 | 0.47 | 1,51 |
| 3/4" | 22,23 (7/8") | 22,66 | 23,29 | 22,98 | 9,75 | 25,0 | 21,25 | 15,10 | 0.42 | 1,41 |

[1] Bohrungs-Nenndurchmesser
[2] minimaler Bohrungsdurchmesser gemäß ACI-Richtlinie 355.2.07
[3] maximaler Bohrungsdurchmesser gemäß ACI-Richtlinie 355.2.07
[4] mittlerer Bohrungsdurchmesser ($d_{cut, med}$ = ($d_{cut, min}$ + $d_{cut, max}$) / 2)
[5] Gewindesteigung
[6] Konuswinkel
[7] Außendurchmesser konusartige Erweiterungsabschnitte
[8] Kerndurchmesser konusartige Erweiterungsabschnitte

**Patentansprüche**

1. Verwendung einer Befestigungsanordnung mit einer Ankerstange (10), wobei die Ankerstange (10) in einer mit einer aushärtbaren Masse versehenen Aufnahmebohrung angeordnet ist, wobei die Ankerstange (10) einen Anbaubereich (14), der Mittel für den Lastangriff aufweist, und einem Verankerungsbereich (12), der in eine Aufnahmebohrung einsetzbar ist und eine Profilierung (16) aufweist, die mit einer in die Aufnahmebohrung eingefüllten, aushärtbaren anorganischen und/oder organischen Mörtelmasse wechselwirkt, aufweist, wobei die Profilierung aus mehreren axial hintereinander angeordneten Erweiterungsabschnitten besteht, die konusartig ausgebildet sind und deren Durchmesser jeweils in Richtung des freien Vorderendes der Ankerstange zunimmt, wobei der Konuswinkel der Erweiterungsabschnitte ($\alpha$) 22,5° bis 27,5° beträgt, **dadurch gekennzeichnet, dass** das Verhältnis von Abstand (p) der Erweiterungsabschnitte zu mittlerem Bohrlochdurchmesser ($d_{cut, med}$) 0,40 bis 0,60 beträgt und das Verhältnis von Außendurchmesser ($d_A$) zu Kerndurchmesser ($d_K$) der Erweiterungsabschnitte 1,35 bis 1,55 beträgt, zur Befestigung einer Ankerstange in einer insbesondere ungereinigten Aufnahmebohrung.

2. Verwendung nach Anspruch 1, **dadurch gekennzeichnet, dass** das Verhältnis von Abstand (p) der Erweiterungsabschnitte zu mittlerem Bohrlochdurchmesser ($d_{cut, med}$) 0,40 bis 0,55 beträgt,
das Verhältnis von Außendurchmesser ($d_A$) zu Kerndurchmesser ($d_K$) der Erweiterungsabschnitte 1,40 bis 1,55 beträgt und
der Konuswinkel der Erweiterungsabschnitte ($\alpha$) 25° beträgt.

3. Verwendung nach Anspruch 1 oder 2, **dadurch gekennzeichnet, dass** der Abstand der konusartigen Erweiterungsabschnitte (16) über die Längserstreckung des Verankerungsbereichs (12) im Wesentlichen konstant ist.

4. Verwendung nach einem der vorhergehenden Ansprüche, **dadurch gekennzeichnet, dass** die Oberfläche der konusartigen Erweiterungsabschnitte (16) gegenüber der organischen und/oder anorganischen Mörtelmasse nichthaftende Eigenschaften aufweist.

5. Verwendung nach Anspruch 4, **dadurch gekennzeichnet, dass** die Oberfläche der konusartigen Erweiterungsabschnitte (16) eine Beschichtung aufweist.

6. Verwendung nach Anspruch 5, **dadurch gekennzeichnet, dass** die Oberfläche der konusartigen Erweiterungsabschnitte (16) galvanisch glanzvernickelt und/oder verchromt ist.

7. Verwendung nach Anspruch 4, **dadurch gekennzeichnet, dass** die Oberfläche der konusartigen Erweiterungsabschnitte (16) elektrochemisch geglättet ist.

8. Verwendung nach Anspruch 7, **dadurch gekennzeichnet, dass** die Oberfläche der konusartigen Erweiterungsabschnitte (16) elektropoliert ist.

9. Verwendung nach einem der vorhergehenden Ansprüche, **dadurch gekennzeichnet, dass** die konusartigen Erweiterungsabschnitte (16) mit Mitteln für den Durchtritt der organischen und/oder anorganischen Mörtelmasse versehen sind.

10. Verwendung nach Anspruch 9, **dadurch gekennzeichnet, dass** die Mittel für den Durchtritt der organischen und/oder anorganischen Mörtelmasse Fließkanäle sind.

11. Verwendung nach einem der Ansprüche 1 bis 8, **dadurch gekennzeichnet, dass** die konusartigen Erweiterungsabschnitte (16) schraublinienförmig entlang des Verankerungsbereichs (12) verlaufen.


**Claims**

1. Use of a fastening arrangement comprising an anchoring rod (10), wherein the anchoring rod (10) is arranged in a receiving bore provided with a curable composition, wherein the anchoring rod (10) has an attachment region (14) having load-application means and an anchoring region (12) that can be inserted into a receiving bore and has a profiled section (16) interacting with a curable inorganic and/or organic mortar composition poured into the receiving bore, wherein the profiled section consists of a plurality of cone-shaped expansion segments arranged axially one behind the other, the diameter of which increases in the direction of the free front end of the anchoring rod, and wherein the cone angle of the expansion segments ($\alpha$) is 22.5° to 27.5°, **characterised in that** the ratio of the spacing (p) of the expansion segments to the mean bore diameter ($d_{cut,med}$) is 0.40 to 0.60 and the ratio of the outer diameter ($d_A$) to the core diameter ($d_K$) of the expansion segments is 1.35 to 1.55, in order to fasten an anchoring rod in an, in particular, uncleaned receiving bore.

2. Use according to claim 1, **characterised in that** the ratio of the spacing (p) of the expansion segments to the mean bore diameter ($d_{cut,\ med}$) is 0.40 to 0.55, the ratio of the outer diameter ($d_A$) to the core diameter ($d_K$) of the expansion segments is 1.40 to 1.55 and the cone angle of the expansion segments ($\alpha$) is 25°.

3. Use according to claim 1 or claim 2, **characterised in that** the spacing of the cone-shaped expansion segments (16) is substantially constant over the longitudinal extent of the anchoring region (12).

4. Use according to one of the preceding claims, **characterised in that** the surface of the cone-shaped expansion segments (16) has non-adhesive properties in relation to the organic and/or inorganic mortar composition.

5. Use according to claim 4, **characterised in that** the surface of the cone-shaped expansion segments (16) has a coating.

6. Use according to claim 5, **characterised in that** the surface of the cone-shaped expansion segments (16) is bright nickel-plated and/or chrome-plated.

7. Use according to claim 4, **characterised in that** the surface of the cone-shaped expansion segments (16) is electrochemically polished.

8. Use according to claim 7, **characterised in that** the surface of the cone-shaped expansion segments (16) is electropolished.

9. Use according to one of the preceding claims, **characterised in that** the cone-shaped expansion segments (16) are provided with means for the passage of the organic and/or inorganic mortar composition.

10. Use according to claim 9, **characterised in that** the means for the passage of the organic and/or inorganic mortar composition are flow channels.

**EP 2 758 675 B1**

**11.** Use according to one of claims 1 to 8, **characterised in that** the cone-shaped expansion segments (16) extend helically along the anchoring region (12).

**Revendications**

**1.** Utilisation d'un système de fixation comportant une tige d'ancrage (10), la tige d'ancrage (10) étant agencée dans un trou de réception pourvu d'une composition durcissable, dans laquelle la tige d'ancrage (10) comporte une zone de fixation (14) incluant des moyens d'application de charge, et une zone d'ancrage (12) qui peut être insérée dans un trou de réception, et un profilé (16) qui interagit avec une composition de mortier inorganique et/ou organique durcissable versée dans le trou de réception, dans laquelle le profilé est constitué de plusieurs sections d'expansion agencées axialement les unes derrière les autres, qui sont formées de manière conique et dont le diamètre augmente respectivement en direction de l'extrémité avant libre de la tige d'ancrage, dans laquelle l'angle du cône de la section d'expansion ($\alpha$) est de 22,5° à 27,5°, **caractérisée en ce que** le rapport de la distance (p) entre les sections d'expansion sur le diamètre moyen de trou ($d_{cut,\,med}$) est de 0,40 à 0,60, et le rapport du diamètre extérieur ($d_A$) sur le diamètre à fond de filet ($d_K$) des sections d'expansion est de 1,35 à 1,55, pour fixer une tige d'ancrage dans un trou de réception en particulier non nettoyé.

**2.** Utilisation selon la revendication 1, **caractérisée en ce que** le rapport de la distance (p) entre les sections d'expansion sur le diamètre moyen de trou ($d_{cut,\,med}$) est de 0,40 à 0,55,
le rapport du diamètre extérieur ($d_A$) sur le diamètre à fond de filet ($d_K$) des sections d'expansion est de 1,40 à 1,55 et l'angle du cône ($\alpha$) des sections d'expansion est de 25°.

**3.** Utilisation selon la revendication 1 ou 2, **caractérisée en ce que** la distance entre les sections d'expansion coniques (16) est sensiblement constante sur l'étendue longitudinale de la zone d'ancrage (12).

**4.** Utilisation selon l'une des revendications précédentes, **caractérisée en ce que** la surface des sections d'expansion coniques (16) a des propriétés anti-adhérentes par rapport à la composition de mortier organique et/ou inorganique.

**5.** Utilisation selon la revendication 4, **caractérisée en ce que** la surface des sections d'expansion coniques (16) comporte un revêtement.

**6.** Utilisation selon la revendication 5, **caractérisée en ce que** la surface des sections d'expansion coniques (16) est galvaniquement revêtue d'un nickelage brillant et/ou chromée.

**7.** Utilisation selon la revendication 4, **caractérisée en ce que** la surface des sections d'expansion coniques (16) est rendue lisse de manière électrochimique.

**8.** Utilisation selon la revendication 7, **caractérisée en ce que** la surface des sections d'expansion coniques (16) est polie de manière électrolytique.

**9.** Utilisation selon l'une des revendications précédentes, **caractérisée en ce que** les sections d'expansion coniques (16) sont pourvues de moyens pour le passage de la composition de mortier organique et/ou inorganique.

**10.** Utilisation selon la revendication 9, **caractérisée en ce que** les moyens pour le passage de la composition de mortier organique et/ou inorganique sont des canaux d'écoulement.

**11.** Utilisation selon l'une des revendications 1 à 8, **caractérisée en ce que** les sections d'expansion coniques (16) s'étendent hélicoïdalement le long de la zone d'ancrage (12).

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009014039 U